(19) Europäisches Patentamt
European Patent Office
Office européen des brevets

(11) EP 3 606 970 B1

# (12) EUROPEAN PATENT SPECIFICATION

(45) Date of publication and mention of the grant of the patent:
**05.05.2021 Bulletin 2021/18**

(21) Application number: **18708893.5**

(22) Date of filing: **26.02.2018**

(51) Int Cl.:
***C08F 265/02*** *(2006.01)*
***C09D 5/02*** *(2006.01)*
***C09D 151/00*** *(2006.01)*
***C09D 7/46*** *(2018.01)*
***C09D 133/04*** *(2006.01)*

(86) International application number:
**PCT/US2018/019680**

(87) International publication number:
**WO 2018/186946 (11.10.2018 Gazette 2018/41)**

## (54) COATINGS FORMULATION WITH OPEN TIME ADDITIVE

BESCHICHTUNGSFORMULIERUNG MIT EINEM OFFENZEIT-ADDITIV

FORMULATION POUR REVÊTEMENTS COMPRENANT UN ADDITIF À DELAI DE COLLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2017 US 201762482347 P**

(43) Date of publication of application:
**12.02.2020 Bulletin 2020/07**

(73) Proprietors:
- **Dow Global Technologies LLC**
  **Midland, MI 48674 (US)**
- **Rohm and Haas Company**
  **Collegeville, PA 19426 (US)**

(72) Inventors:
- **BARDMAN, James Keith**
  **Green Lane, PA 18054 (US)**
- **DEROCHER, Jonathan**
  **Collegeville, PA 19426 (US)**
- **HEJL, Andrew**
  **Collegeville, PA 19426 (US)**
- **VANDYK, Anthony K.**
  **Collegeville, PA 19426 (US)**
- **WANG, Lin**
  **Furlong, PA 18925 (US)**
- **YEUNG, Kimy**
  **Collegeville, PA 19426 (US)**

(74) Representative: **Murgitroyd & Company**
**Murgitroyd House**
**165-169 Scotland Street**
**Glasgow G5 8PL (GB)**

(56) References cited:
**EP-A2- 0 301 880**
**US-A- 4 468 498**
**US-A1- 2006 247 357**
**US-A1- 2008 058 473**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Background of the Invention

The present invention relates to a coatings formulation comprising an aqueous dispersion of a) an open time additive, which is a dispersion of neutralized polymer particles; b) a binder; and c) a rheology modifier.

Government regulations and market movement continually drive toward zero volatile organic compounds (VOC) for coating formulations. Consequently, waterborne formulations that are free of volatile solvents and coalescents have become increasingly popular in the industry. Nevertheless, paint properties have been compromised due to this sea change; among them is open time, which is the period of time during which a freshly applied paint film can be reworked without leaving brush marks. In a solvent-borne system, open time is about 30 to 45 min; in a typical waterborne formulation, open time is on the order of 3 to 5 min. Accordingly, there is a need in the art to find an additive for waterborne formulations that increases open time over currently available additives without degrading other properties of the final coating, such as film adhesive and cohesive strength, hardness, block resistance, early blister resistance, scrub and wash resistance, stain resistance, and mar resistance.

### Summary of the Invention

The present invention addresses a need in the art by providing, in a first aspect, a composition comprising an aqueous dispersion of neutralized multistage polymer particles comprising a) a first stage comprising, based on the weight of the first stage: i) from 10 to 50 weight percent structural units of a sodium, potassium, lithium, or a first quaternary ammonium salt of a carboxylic acid monomer, wherein the conjugate base of the first quaternary ammonium salt has a boiling point of at least 150 °C; and ii) from 50 to 70 weight percent structural units of a nonionic ethylenically unsaturated monomer; and b) a second stage having a $T_g$ of not greater than 25°C; wherein the ratio of the first stage to the second stage is in the range of from 1:3.2 to 1:6.

In a second aspect, the present invention is a coatings composition comprising an aqueous dispersion of neutralized multistage polymer particles, a binder, and a rheology modifier, wherein the multistage polymer particles comprises a) a first stage comprising, based on the weight of the first stage: i) from 10 to 50 weight percent structural units of a sodium, potassium, lithium, or first quaternary ammonium salt of a carboxylic acid monomer, wherein the conjugate base of the first quaternary ammonium salt has a boiling point of at least 150 °C; and ii) from 50 to 70 weight percent structural units of a nonionic ethylenically unsaturated monomer; and b) a second stage having a $T_g$ of not greater than 25°C; wherein the ratio of the first stage to the second stage is in the range of from 1:3.2 to 1:6; wherein the concentration of the multistage polymer particles is in the range of from 0.1 to 10 weight percent, based on the weight of the coatings composition.

### Detailed Description of the Invention

In a first aspect, the present invention is a composition comprising an aqueous dispersion of neutralized multistage polymer particles comprising a) a first stage comprising, based on the weight of the first stage: i) from 10 to 50 weight percent structural units of a sodium, potassium, lithium, or first quaternary ammonium salt of a carboxylic acid monomer, wherein the conjugate base of the first quaternary ammonium salt has a boiling point of at least 150 °C; and ii) from 50 to 70 weight percent structural units of a nonionic ethylenically unsaturated monomer; and b) a second stage having a $T_g$ of not greater than 25°C; wherein the ratio of the first stage to the second stage is in the range of from 1:3.2 to 1:6.

The neutralized multistage polymer particles are characterized by a neutralized first stage portion (the core), preferably a salt of a carboxylic acid functionalized core, and a second stage portion (the shell) having a $T_g$ as calculated by the Fox equation of not greater than 25°C. The words "core" and "shell" are used herein as a convenience to describe the first and final stages of the polymerization process (or first and second stages if the polymer particles are generated in two stages). Accordingly, the final neutralized polymer particles may, but need not have a core-shell morphology.

The neutralized multi-stage polymer particles are prepared by contacting an aqueous dispersion of alkali swellable polymer particles with a base which is LiOH, NaOH, KOH, or an amine having a boiling point of at least 150 °C. Examples of an amine having a boiling point of at least 150°C include 2-amino-2-methyl-1-propanol (commercially available as AMP 95 neutralizing agent) and *n*-butyldiethanolamine (commercially available as Vantex T neutralizing agent). The dispersion of alkali swellable polymer particles may be prepared by any of a number of techniques, including those well known in the art. (See US 4,468,498; US 5,326,843; and US 9,340,685). For example, the core may be produced by a single stage or a multistage process, optionally in the presence of a chain transfer agent such as *n*-dodecyl mercaptan or mercaptoethanol. The core may also be prepared from a seed process. The core is then used in making the alkali swellable polymer particles in one or more additional stages.

The concentration of base is sufficient to neutralize the core of the alkali swellable polymer particles. As used herein, "neutralized" means that the pH of the core is raised to a pH that is at least 1.5 units higher than the $pK_a$ of the acid monomer used to make the acid functionalized core. For example, if methacrylic acid ($pK_a$ = 4.65) is used to make the acid functionalized core, the pH of the alkali swellable dispersion is adjusted to at least 6.15, preferably to at least 6.5, more preferably to at least 7, and most preferably to at least 8. Preferably the amount of base added is at least 30% stoichiometric, more preferably, at least 50% stoichiometric, and most preferably at least stoichiometric with respect to the acid content of alkali swellable polymer particles.

The neutralized core of the neutralized multi-stage polymer particles comprises from 10, preferably from 20, more preferably from 30, more preferably from 35, and most preferably 38 weight percent, to 50, preferably to 45, and more preferably to 42 weight percent structural units of a lithium, sodium, potassium, or a first quaternary ammonium salt of a carboxylic acid monomer, based on the weight of the core. As used herein, the term "structural units" refers to the remnant of the recited monomer after polymerization. For example, a structural unit of sodium methacrylate is as illustrated:

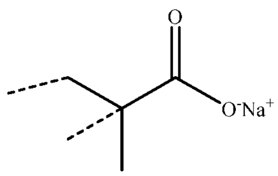

structural unit of sodium methacrylate

The core also preferably comprises from 50, more preferably from 55, and most preferably from 58 weight percent, to preferably 70, more preferably to 65, and most preferably to 62 weight percent structural units of a nonionic ethylenically unsaturated monomer.

Examples of salts of carboxylic acid functionalized monomers include lithium, sodium, and potassium salts of methacrylic acid, acrylic acid, and itaconic acid, with lithium, sodium, and potassium salts of acrylic acid and methacrylic acid being preferred. Examples of nonionic ethylenically unsaturated monomers include one or more $C_1$-$C_{10}$ alkyl acrylates and methacrylates such as methyl methacrylate, ethyl acrylate, ethyl methacrylate, butyl acrylate, butyl methacrylate, and 2-ethylhexyl acrylate; and styrene. Methyl methacrylate and butyl methacrylate are preferred nonionic ethylenically unsaturated monomers.

The neutralized core may also comprise structural units of a polyethylenically unsaturated monomer such as ethylene glycol di(meth)acrylate, allyl (meth)acrylate, 1,3-butane-diol di(meth)acrylate, diethylene glycol di(-meth)acrylate, trimethylol propane trimethacrylate, or divinyl benzene. The structural units of the polyethylenically unsaturated monomer, if present, are preferably in the range of from 0.1, more preferably from 0.3 weight percent to 10, more preferably to 3 weight percent, based on the weight of the core.

The second stage (shell) preferably has a $T_g$ of not greater than 20°C, and more preferably not greater than 15 °C. Preferably the shell comprises structural units of one or more monomers having a $T_g$ of > 50°C (that is, one or more high $T_g$ monomers) such as methyl methacrylate ($T_g$ = 105 °C) or styrene ($T_g$ = 100 °C) or a combination thereof, and structural units of at least one monomer having a $T_g$ of less than 10 °C (that is, one or more one low $T_g$ monomers) such as ethyl acrylate ($T_g$ = -23 °C), butyl acrylate ($T_g$ = -53 °C), or 2-ethylhexyl acrylate ($T_g$ = -52 °C) or combinations thereof. The shell preferably further comprises structural units of a lithium, sodium, potassium, or a first quaternary ammonium salt of an acid monomer, preferably a carboxylic acid monomer, preferably methacrylic acid ($T_g$ = 228 °C) or acrylic acid ($T_g$ = 101 °C). (The recited $T_g$s refer to those of the corresponding homopolymers as reported by Polymer Properties Database © 2015.)

Preferably, the concentration of structural units of the high $T_g$ monomer in the shell, preferably methyl methacrylate or styrene, more preferably methyl methacrylate, is in the range of from 40, more preferably from 42, and most preferably from 44 weight percent, to preferably 60, more preferably to 55, more preferably to 50, and most preferably to 48 weight percent, based on the weight of the shell.

Preferably the concentration of structural units of the low $T_g$ monomer in the shell is in the range of from 38, more preferably from 45, more preferably from 48 weight percent, and most preferably from 50 weight percent, to preferably 59, more preferably to 57, and most preferably to 54 weight percent, based on the weight of the shell. The low $T_g$ monomer is preferably butyl acrylate.

Preferably, the concentration of structural units of the salt of the carboxylic acid monomer in the shell is in the range of from 0.2, more preferably from 0.4 weight percent, to preferably 5, more preferably to 4, and most preferably to 3 weight percent, based on the weight of the shell.

Preferably, the neutralized multi-stage polymer particles contain a substantial absence of $NH4^+$ or second

quaternary ammonium salt counterions, where the conjugate acid of the second quaternary ammonium salt is an amine having a boiling point of less than 150 °C, preferably less than 120 °C. As used herein, the term "substantial absence of $NH4^+$, or second quaternary ammonium salt counterions" means that the concentration of $NH4^+$, or low boiling point quaternary ammonium salt counterions of the neutralized multi-stage polymer particles is less than 20, preferably less than 10, and most preferably less than 5 mole equivalents, per 100 mole equivalents of the lithium, sodium, potassium, or first quaternary ammonium cation of an amine having a boiling point of at least 150 °C. Most preferably, the neutralized multi-stage polymer particles contain an absence of $NH4^+$, or second quaternary ammonium salt counterions, where the conjugate acid of the second quaternary ammonium salt is an amine having a boiling point of less than 120 °C. Preferably, the concentration of structural units of ammonium carboxylate in the multi-stage polymer particles is less than 5, more preferably less than 2, more preferably less than 1, and most preferably less than 0.5 weight percent, based on the weight of the multi-stage polymer particles.

Prior to neutralization, the core preferably has an average diameter in the range of from 80 nm, more preferably from 100 nm, most preferably from 110 nm, to preferably 500 nm, more preferably to 400 nm, and most preferably to 350 nm, as measured by a BI-90 Plus Brookhaven

Particle Analyzer. After neutralization, the neutralized multistage polymer particles preferably have a particle size in the range of from 250 nm to 700 nm; the core preferably has a size in the range of from 120 nm, more preferably from 140 nm to preferably 400 nm, more preferably to 350 nm, as measured by a Brookhaven BI-90 Plus Particle Analyzer.

In the first aspect of the present invention, the composition has a volatile organic content (VOC) of less than 250 g/L, more preferably less than 200 g/L, more preferably less than 150 g/L, and most preferably less than 50 g/L. VOC in g/L excluding water is as calculated by the following equation:

$$\text{VOC (g/L) of coating - water} = \frac{(\text{VOC}_1\ (\text{g in 1 L}) + \text{VOC}_2\ (\text{g in 1 L}) + ...)}{(1\ \text{L} - (\text{H}_2\text{O (g in 1 L)} / \text{H}_2\text{O}_\text{d}) - (\text{non VOC}_1\ (\text{g in 1L}) / \text{non-VOC}_{1\text{d}}) - ...)}$$

where $H_2O_d$ and $VOC_{1d}$ refer to the density of water and the density of $VOC_1$ respectively.

The aqueous dispersion of multi-stage neutralized polymer particles is useful as an open time additive in coatings formulations. Accordingly, in another aspect, the present invention is a coatings composition comprising an aqueous dispersion of the neutralized multistage polymer particles, a binder, and a rheology modifier, wherein the concentration of the multistage polymer particles is in the range of from 0.1 to 5 weight percent, based on the weight of the coatings composition.

As used herein, "binder" polymer particles that exhibit less than a 10-nm increase in particle size when exposed to base. These polymer particles (binder solids) preferably have an average diameter in the range of from 70 nm, more preferably from 100 nm to 600 nm, more preferably to 500 nm as determined by a Brookhaven BI-90 Plus Particle Analyzer. The binder solids are also characterized by comprising less than 5 weight percent, preferably less than 4 weight percent, and most preferably less than 3 weight percent structural units of an acid monomer, based on the weight of the binder solids.

The binder is advantageously prepared by aqueous emulsion polymerization of one or more ethylenically unsaturated monomers, examples of which include styrene, vinyl acetate, acrylamide, methacrylamide, acrylonitrile, and $C_1$-$C_{10}$-alkyl esters of acrylic acid or methacrylic acid including methyl methacrylate, ethyl methacrylate, ethyl acrylate, butyl acrylate, 2-propylheptyl acrylate, and 2-ethylhexyl acrylate. The concentration of binder polymer particles in the coatings formulation is preferably in the range of from 3, more preferably from 6, to preferably 40, more preferably to 30 weight percent, based on the weight of the coatings formulation.

As used herein, the term "rheology modifier" refers to water soluble or water dispersible associative rheology modifiers such as hydrophobically modified ethylene oxide urethane polymers (HEURs), hydrophobically modified alkali swellable emulsions (HASEs), and styrenemaleic anhydride terpolymers (SMATs), as well as non-associative rheology modifiers such as alkali swellable emulsions (ASEs). The concentration of the rheology modifier is preferably in the range of from 0.3 to 2 weight percent, based on the weight of the coatings composition.

The aqueous dispersion of neutralized multi-stage polymer particles, the binder, and the rheology modifier may be combined in any order to achieve the coatings composition of the present invention. Alternatively, a dispersion of alkali swellable polymer particles may be combined with the binder and rheology modifier in any order, followed by neutralization of the alkali swellable dispersion, to form the multi-stage neutralized polymer particles. The alkali swellable polymer particles can be neutralized without any further addition of base (because the composition is already sufficiently basic to neutralize and swell the core of polymer particles); it is preferred, however, to post-add base to the coatings formulation to adjust it to the desired pH, which is usually the pH of the formulation prior to introduction of the alkali swellable polymer particles.

The concentration of neutralized multi-stage polymer particles in the coatings composition is in the range of from 0.1, preferably from 0.2, and more preferably from 0.5 weight percent, to 10, preferably to 5, more preferably to 4,

and most preferably to 3 weight percent, based on the weight of the coatings composition. At these relatively low concentrations, it has surprisingly been discovered that no appreciable change in viscosity occurs in the coatings formulation where neutralization is accomplished upon combining the dispersion of alkali swellable polymer particles with the other components of the coatings formulation. Although US 4,468,498 teaches that certain encapsulated alkali swellable polymer particles are effective as thickeners in coatings formulations, the viscosity change of the paint formulation of the present invention after neutralization is less than 10%, preferably less than 5%, and more preferably less than 2% compared to the viscosity of the coatings composition before neutralization.

Accordingly, the dispersion of multi-stage neutralized polymer particles of the present invention, while suitable as an open time additive for coatings compositions, is not suitable as a thickener in the concentrations contemplated; the concentration of the alkali swellable polymer particles is purposefully maintained at a level that does not produce appreciable thickening of the composition.

The coatings composition of the present invention advantageously further comprises any or all of the following components: dispersants, pigments, defoamers, surfactants, solvents, extenders, coalescents, biocides, opaque polymers, and colorants. The composition is a low volatile organic content (VOC) composition having less than 50 g/L of VOCs.

## Examples

### Preparation of an Alkali Swellable Polymer

#### A. Preparation of 1st Stage (Core)

A first stage (core, 60 MMA/ 40 MAA) was prepared as follows: A 5-L, four-necked round bottom flask (kettle) was equipped with a paddle stirrer, thermometer, N2 inlet, and reflux condenser. Deionized water (1760 g), was added to the kettle and heated to 86°C under N2. A monomer emulsion (ME1) was prepared by mixing deionized water (720 g), sodium dodecyl benzene sulfonate (SDS, 5.2 g, 23% active), methyl methacrylate (780.0 g), and methacrylic acid (10.0 g). A portion of ME1 (164.0 g) was removed and placed aside in a separate container. To the remaining ME1 was added SDS (50.0 g, 23% active) and methacrylic acid (510.0 g). When the kettle temperature reached 86°C a mixture of deionized water (160.0 g) and SDS (5.0 g, 23% active) was added to the kettle, followed by the addition of the ME1 initially removed and set aside. A mixture of sodium persulfate (5.5 g) in deionized water (40.0 g) was then added to the kettle. The temperature of the kettle dropped to ~76°C, then was allowed to rise to 85 °C during a 15-min hold period. The remaining ME1 was then fed to the kettle over 2 h at 85°C. After completion of the ME1 feed, the dispersion was held at 85°C for 15 min, whereupon the dispersion was cooled to 25°C and filtered to remove any coagulum. The filtered dispersion had a pH of 2.9, a solids content of 31.7% and an average particle size of 152 nm.

#### B. Preparation of a Dispersion of Alkali Swellable Polymer Particles with a 1:5 Core-to-Shell Ration and 40% Methacrylic Acid in the Core

To a 5-L, four-necked round bottom flask (kettle) was equipped with a paddle stirrer, thermometer, N2 inlet, and reflux condenser was added DI water (500 g) and heated to 86°C under N2. A monomer emulsion (ME2) was prepared by mixing DI water 193 g, SDS (14.3 g, 23% active), butyl acrylate (655.2 g), methyl methacrylate (585.9 g), and methacrylic acid (18.9 g). When the kettle temperature reached 86°C, the dispersion of part A (795.0 g) was added to the kettle and the temperature adjusted to 60 °C. A 0.1% solution of iron (II) sulfate in water (20 g) was then added to the kettle along with a solution of isoascorbic acid (0.6 g) mixed with DI water (45 g). Co-feed solutions of sodium persulfate (3.8 g) in DI water (90 g) and sodium bisulfite (2.5 g) in DI water (90 g) were added at a rate of 0.7 g/min to the kettle. Three minutes after the initiation of co-feed solution addition, the ME2 was added at a rate of 2 g/min. Ten minutes after initiation of the ME2 addition, the feed rate was increased to 4 g/m. After another ten minutes, the ME2 feed rate was increased to 8 g/min. After another ten minutes, the ME feed rate was increased to 16 g/min. The temperature of the kettle was kept at 59-61 °C throughout the addition of ME2. After completion of the addition of ME2, the co-feeds were overfed for another twenty minutes. After the completion of co-feed addition, the contents of the kettle was cooled to room temperature and filtered to remove any coagulum. The filtered dispersion had a pH of 2.1, a solids content of 47.5% and an average particle size of 275 nm as measured by a BI-90 Plus Brookhaven Particle Analyzer.

The alkali swellable polymer was swelled in three separate experiments with two different bases: 2-amino-2-methyl-1-propanol, and NaOH as follows: Neutralizing base was added to the polymer dispersion to prepare a dispersion with a final solids content of 25%. The neutralizing base was added at room temperature with mechanical mixing over 10 min. The pH after one hour of completion of addition was measured to be >7. Paint formulations were prepared by adding the dispersion of swelled particles to a paint formulation described in Table 1.

Table 1 - Paint Formulation with Open Time Additive

| Material Name | Pounds | Gallons |
|---|---|---|
| RHOPLEX™ HG-706 Binder | 525.7 | 59.37 |
| BYK-024 Defoamer | 1.0 | 0.1 |
| Propylene Glycol | 4.3 | 0.5 |
| TRITON™ X-100 Surfactant | 4.4 | 0.5 |
| Water | 16.7 | 2.0 |
| KATHON™ LX 1.5% Biocide | 1.5 | 0.2 |
| TAMOL™ 2002 Dispersant | 2.0 | 0.2 |
| Ammonia (28%) | 1.0 | 0.1 |
| Ti-Pure R-746 $TiO_2$ | 285.0 | 14.7 |
| Water | 20.0 | 2.4 |
| TEXANOL Coalescent | 7.9 | 1.0 |
| ACRYSOL™ RM-2020E Rheology Modifier | 20.0 | 2.3 |
| ACRYSOL™ RM-725 Rheology Modifier | 3.0 | 0.4 |
| BYK-024 Defoamer | 2.0 | 0.2 |
| Swelled Particles (25% solids) | 95.5 | 11.4 |
| Water | 38.7 | 4.63 |
| Totals | 1030 | 100 |
| RHOPLEX, TRITON, KATHON, TAMOL, and ACRYSOL are all Trademarks of The Dow Chemical Company or its Affiliates. | | |

Paint samples were formulated using an overhead mixer. Rheology modifier and water amounts were adjusted to target a Stormer viscosity of 95 KU and an ICI viscosity of 1.3. Samples were equilibrated overnight before being evaluated for open time.

Open time was measured in accordance with ASTM-D7488. The test was performed in a constant temperature/humidity room (72 °F, 50% RH). Paint was deposited on a black vinyl scrub chart using a drawdown bar with a 5-mil gap. The film was immediately scored by making parallel marks in the wet paint using two wooden applicators. Sections of the film were then brushed at timed intervals using a primed 1" nylon brush. The film was allowed to dry overnight. A panel of at least three readers visually inspected the panel and recorded the last cross brush section that showed no sign of the score marks as the open time. The measured open time for the samples neutralized by NaOH and 2-amino-2-methyl-1-propanol was 9 min for each coating, as compared to 6 min for a coating prepared from the identical paint formulation but without the open time additive.

## Claims

1. A composition comprising an aqueous dispersion of neutralized multistage polymer particles comprising a) a first stage comprising, based on the weight of the first stage: i) from 20 to 50 weight percent structural units of a sodium, potassium, lithium, or a first quaternary ammonium salt of a carboxylic acid monomer, wherein the conjugate base of the first quaternary ammonium salt has a boiling point of at least 150 °C; and ii) from 50 to 80 weight percent structural units of a nonionic ethylenically unsaturated monomer; and b) a second stage having a $T_g$ of not greater than 25 °C; wherein the ratio of the first stage to the second stage is in the range of from 1:3.2 to 1:6.

2. The composition of Claim 1 wherein the first stage comprises from 30 to 50 weight percent structural units of a sodium, potassium, or lithium salt of a carboxylic acid monomer and from 50 to 70 weight percent structural units of a nonionic ethylenically unsaturated monomer.

3. The composition of Claim 2 wherein the first stage of the multi-stage polymer particles comprises:

a1) from 35 to 45 weight percent structural units of a sodium, potassium, or lithium salt of methacrylic acid or acrylic acid; and
b1) from 55 to 65 weight percent structural units of methyl methacrylate;
wherein the second stage of the multi-stage polymer particles comprises:

a2) from 40 to 60 weight percent structural units of styrene or methyl methacrylate;
b2) from 38 to 59 weight percent structural units of at least one monomer selected from the group consisting of ethyl acrylate, butyl acrylate, and 2-ethylhexyl acrylate; and
c2) from 0.2 to 5 weight percent structural units of a lithium, sodium, or potassium salt of a carboxylic acid monomer;
wherein the $T_g$ of the second stage is less than 20 °C.

4. The composition of any of Claims 1 to 3 wherein the multi-stage polymer particles comprise a substantial absence of $NH_4^+$ or second quaternary ammonium salt counterions, where the conjugate acid of the second quaternary ammonium salt is an amine having a boiling point of less than 120 °C.

5. The composition of any of Claims 1 to 3 wherein the multi-stage polymer particles comprise less than 0.2 weight percent structural units of ammonium carboxylate, based on the weight of the multi-stage polymer particles, wherein the composition has a VOC of less than 50 g/L.

6. The composition of any of Claims 1 to 3 wherein the particle size of the multistage polymer particles is from 250 nm to 700 nm.

7. A coatings composition comprising an aqueous dispersion of neutralized multistage polymer particles, a binder, and a rheology modifier, wherein the multistage polymer particles comprises a) a first stage comprising, based on the weight of the first stage: i) from 30 to 50 weight percent structural units of a sodium, potassium, lithium, or quaternary ammonium salt of a carboxylic acid monomer, wherein the conjugate base of the quaternary ammonium salt has a boiling point of at least 150 °C; and ii) from 50 to 70 weight percent structural units of a nonionic ethylenically unsaturated monomer; and b) a second stage having a $T_g$ of not greater than 25 °C; wherein the ratio of the first stage to the second stage is in the range of from 1:3.2 to 1:6; wherein the concentration of the multistage polymer particles is in the range of from 0.1 to 10 weight percent, based on the weight of the coatings composition.

8. The composition of Claim 7 wherein the concentration of the multistage polymer particles is in the range of from 0.1 to 5 weight percent, based on the weight of the coatings composition; wherein the first stage of the multi-stage polymer particles comprises:

a1) from 35 to 45 weight percent structural units of a sodium, potassium, or lithium salt of methacrylic acid or acrylic acid; and
b1) from 55 to 65 weight percent structural units of methyl methacrylate;

wherein the second stage comprises:

a2) from 40 to 60 weight percent structural units of styrene or methyl methacrylate;
b2) from 38 to 59 weight percent structural units of at least one monomer selected from the group consisting of ethyl acrylate, butyl acrylate, and 2-ethylhexyl acrylate; and
c2) from 0.2 to 5 weight percent structural units of a lithium, sodium, or potassium salt of a carboxylic acid monomer;
wherein the $T_g$ of the second stage is less than 20 °C.

9. The composition of either of Claims 7 or 8 which further comprises at least one component selected from the group consisting of dispersants, pigments, defoamers, surfactants, solvents, extenders, coalescents, biocides, opaque polymers, and colorants, wherein the particle size of the multistage polymer particles is from 250 nm to 700 nm.

10. The composition of Claim 9 which has VOC of less than 50 g/L.

**Patentansprüche**

1. Eine Zusammensetzung, die eine wässrige Dispersion neutralisierter mehrstufiger Polymerpartikel beinhaltet, welche Folgendes beinhalten: a) eine erste Stufe, die bezogen auf das Gewicht der ersten Stufe Folgendes beinhaltet: i) zu 20 bis 50 Gewichtsprozent strukturelle Einheiten eines Natrium-, Kalium-, Lithium- oder eines ersten quartären Ammoniumsalzes eines Carbonsäuremonomers, wobei die korrespondierende Base des ersten quartären Ammoniumsalzes einen Siedepunkt von mindestens 150°C aufweist; und ii) zu 50 bis 80 Gewichtsprozent strukturelle Einheiten eines nichtionischen, ethylenisch ungesättigten Monomers; und b) eine zweite Stufe, die eine $T_g$ von nicht höher als 25°C aufweist; wobei das Verhältnis der ersten Stufe zu der zweiten Stufe in dem Bereich von 1 : 3,2 bis 1 : 6 liegt.

2. Zusammensetzung gemäß Anspruch 1, wobei die erste Stufe zu 30 bis 50 Gewichtsprozent strukturelle Einheiten eines Natrium-, Kalium- oder Lithiumsalzes eines Carbonsäuremonomers und zu 50 bis 70 Gewichtsprozent strukturelle Einheiten eines nichtionischen, ethylenisch ungesättigten Monomers beinhaltet.

3. Zusammensetzung gemäß Anspruch 2, wobei die erste Stufe der mehrstufigen Polymerpartikel Folgendes beinhaltet:

   a1) zu 35 bis 45 Gewichtsprozent strukturelle Einheiten eines Natrium-, Kalium- oder Lithiumsalzes von Methacrylsäure oder Acrylsäure; und
   b1) zu 55 bis 65 Gewichtsprozent strukturelle Einheiten von Methylmethacrylat;

   wobei die zweite Stufe der mehrstufigen Polymerpartikel Folgendes beinhaltet:

   a2) zu 40 bis 60 Gewichtsprozent strukturelle Einheiten von Styrol oder Methylmethacrylat;
   b2) zu 38 bis 59 Gewichtsprozent strukturelle Einheiten von mindestens einem Monomer, ausgewählt aus der Gruppe, bestehend aus Ethylacrylat, Butylacrylat und 2-Ethylhexylacrylat; und
   c2) zu 0,2 bis 5 Gewichtsprozent strukturelle Einheiten eines Lithium-, Natrium- oder Kaliumsalzes eines Carbonsäuremonomers;
   wobei die $T_g$ der zweiten Stufe niedriger als 20°C ist.

4. Zusammensetzung gemäß einem der Ansprüche 1 bis 3, wobei die mehrstufigen Polymerpartikel eine wesentliche Abwesenheit von Gegenionen von einem zweiten quartären Ammoniumsalz oder $NH_4^+$ beinhalten, wobei die korrespondierende Säure des zweiten quartären Ammoniumsalzes ein Amin mit einem Siedepunkt von niedriger als 120°C ist.

5. Zusammensetzung gemäß einem der Ansprüche 1 bis 3, wobei die mehrstufigen Polymerpartikel bezogen auf das Gewicht der mehrstufigen Polymerpartikel zu weniger als 0,2 Gewichtsprozent strukturelle Einheiten von Ammoniumcarboxylat beinhalten, wobei die Zusammensetzung einen VOC-Gehalt von weniger als 50 g/l aufweist.

6. Zusammensetzung gemäß einem der Ansprüche 1 bis 3, wobei die Partikelgröße der mehrstufigen Polymerpartikel von 250 nm bis 700 nm beträgt.

7. Eine Beschichtungszusammensetzung, die eine wässrige Dispersion neutralisierter mehrstufiger Polymerpartikel, ein Bindemittel und einen Rheologiemodifikator beinhaltet, wobei die mehrstufigen Polymerpartikel Folgendes beinhalten: a) eine erste Stufe, die bezogen auf das Gewicht der ersten Stufe Folgendes beinhaltet: i) zu 30 bis 50 Gewichtsprozent strukturelle Einheiten eines Natrium-, Kalium-, Lithium- oder quartären Ammoniumsalzes eines Carbonsäuremonomers, wobei die korrespondierende Base des quartären Ammoniumsalzes einen Siedepunkt von mindestens 150 °C aufweist; und ii) zu 50 bis 70 Gewichtsprozent strukturelle Einheiten eines nichtionischen, ethylenisch ungesättigten Monomers; und b) eine zweite Stufe, die eine $T_g$ von nicht höher als 25 °C aufweist; wobei das Verhältnis der ersten Stufe zu der zweiten Stufe in dem Bereich von 1 : 3,2 bis 1 : 6 liegt;
   wobei die Konzentration der mehrstufigen Polymerpartikel bezogen auf das Gewicht der Beschichtungszusammensetzung in dem Bereich von 0,1 bis 10 Gewichtsprozent liegt.

8. Zusammensetzung gemäß Anspruch 7, wobei die Konzentration der mehrstufigen Polymerpartikel bezogen auf das Gewicht der Beschichtungszusammensetzung in dem Bereich von 0,1 bis 5 Gewichtsprozent liegt;
   wobei die erste Stufe der mehrstufigen Polymerpartikel Folgendes beinhaltet:

a1) zu 35 bis 45 Gewichtsprozent strukturelle Einheiten eines Natrium-, Kalium- oder Lithiumsalzes von Methacrylsäure oder Acrylsäure; und
b1) zu 55 bis 65 Gewichtsprozent strukturelle Einheiten von Methylmethacrylat;

wobei die zweite Stufe Folgendes beinhaltet:

a2) zu 40 bis 60 Gewichtsprozent strukturelle Einheiten von Styrol oder Methylmethacrylat;
b2) zu 38 bis 59 Gewichtsprozent strukturelle Einheiten von mindestens einem Monomer, ausgewählt aus der Gruppe, bestehend aus Ethylacrylat, Butylacrylat und 2-Ethylhexylacrylat; und
c2) zu 0,2 bis 5 Gewichtsprozent strukturelle Einheiten eines Lithium-, Natrium- oder Kaliumsalzes eines Carbonsäuremonomers;
wobei die $T_g$ der zweiten Stufe niedriger als 20 °C ist.

**9.** Zusammensetzung gemäß einem der Ansprüche 7 oder 8, die ferner mindestens eine Komponente, ausgewählt aus der Gruppe, bestehend aus Dispergiermitteln, Pigmenten, Entschäumern, Tensiden, Lösungsmitteln, Streckmitteln, Koaleszenzmitteln, Bioziden, deckenden Polymeren und Farbmitteln, beinhaltet, wobei die Partikelgröße der mehrstufigen Polymerpartikel von 250 nm bis 700 nm beträgt.

**10.** Zusammensetzung gemäß Anspruch 9, die einen VOC-Gehalt von weniger als 50 g/l aufweist.

**Revendications**

**1.** Une composition comprenant une dispersion aqueuse de particules de polymère multiphases neutralisées comprenant a) une première phase comprenant, rapporté au poids de la première phase : i) de 20 à 50 pour cent en poids d'unités structurales d'un sel de sodium, de potassium, de lithium, ou d'un premier sel d'ammonium quaternaire d'un monomère d'acide carboxylique, dans laquelle la base conjuguée du premier sel d'ammonium quaternaire a un point d'ébullition d'au moins 150 °C ; et ii) de 50 à 80 pour cent en poids d'unités structurales d'un monomère éthyléniquement insaturé non ionique ; et b) une deuxième phase ayant une $T_g$ qui n'est pas supérieure à 25 °C ; dans laquelle le rapport de la première phase à la deuxième phase est compris dans l'intervalle allant de 1/3,2 à 1/6.

**2.** La composition de la revendication 1 dans laquelle la première phase comprend de 30 à 50 pour cent en poids d'unités structurales d'un sel de sodium, de potassium, ou de lithium d'un monomère d'acide carboxylique et de 50 à 70 pour cent en poids d'unités structurales d'un monomère éthyléniquement insaturé non ionique.

**3.** La composition de la revendication 2 dans laquelle la première phase des particules de polymère multiphases comprend :

a1) de 35 à 45 pour cent en poids d'unités structurales d'un sel de sodium, de potassium, ou de lithium d'acide méthacrylique ou d'acide acrylique ; et
b1) de 55 à 65 pour cent en poids d'unités structurales de méthacrylate de méthyle ;

dans laquelle la deuxième phase des particules de polymère multiphases comprend :

a2) de 40 à 60 pour cent en poids d'unités structurales de styrène ou de méthacrylate de méthyle ;
b2) de 38 à 59 pour cent en poids d'unités structurales d'au moins un monomère sélectionné dans le groupe constitué de l'acrylate d'éthyle, de l'acrylate de butyle, et de l'acrylate de 2-éthylhexyle ; et
c2) de 0,2 à 5 pour cent en poids d'unités structurales d'un sel de lithium, de sodium, ou de potassium d'un monomère d'acide carboxylique ;
dans laquelle la $T_g$ de la deuxième phase est inférieure à 20 °C.

**4.** La composition de n'importe lesquelles des revendications 1 à 3 dans laquelle les particules de polymère multiphases comprennent une absence substantielle de $NH_4^+$ ou contre-ions de deuxième sel d'ammonium quaternaire, où l'acide conjugué du deuxième sel d'ammonium quaternaire est une amine ayant un point d'ébullition inférieur à 120 °C.

**5.** La composition de n'importe lesquelles des revendications 1 à 3 dans laquelle les particules de polymère multiphases comprennent moins de 0,2 pour cent en poids d'unités structurales de carboxylate d'ammonium, rapporté au poids

des particules de polymère multiphases, la composition ayant une teneur en COV inférieure à 50 g/L.

**6.** La composition de n'importe lesquelles des revendications 1 à 3 dans laquelle la taille de particule des particules de polymère multiphases va de 250 nm à 700 nm.

**7.** Une composition de revêtements comprenant une dispersion aqueuse de particules de polymère multiphases neutralisées, un liant, et un modificateur de rhéologie, les particules de polymère multiphases comprenant a) une première phase comprenant, rapporté au poids de la première phase : i) de 30 à 50 pour cent en poids d'unités structurales d'un sel de sodium, de potassium, de lithium, ou d'ammonium quaternaire d'un monomère d'acide carboxylique, dans laquelle la base conjuguée du sel d'ammonium quaternaire a un point d'ébullition d'au moins 150 °C ; et ii) de 50 à 70 pour cent en poids d'unités structurales d'un monomère éthyléniquement insaturé non ionique ; et b) une deuxième phase ayant une $T_g$ qui n'est pas supérieure à 25 °C ; dans laquelle le rapport de la première phase à la deuxième phase est compris dans l'intervalle allant de 1/3,2 à 1/6 ;
dans laquelle la concentration des particules de polymère multiphases est comprise dans l'intervalle allant de 0,1 à 10 pour cent en poids, rapporté au poids de la composition de revêtements.

**8.** La composition de la revendication 7 dans laquelle la concentration des particules de polymère multiphases est comprise dans l'intervalle allant de 0,1 à 5 pour cent en poids, rapporté au poids de la composition de revêtements ; dans laquelle la première phase des particules de polymère multiphases comprend :

a1) de 35 à 45 pour cent en poids d'unités structurales d'un sel de sodium, de potassium, ou de lithium d'acide méthacrylique ou d'acide acrylique ; et
b1) de 55 à 65 pour cent en poids d'unités structurales de méthacrylate de méthyle ;

dans laquelle la deuxième phase comprend :

a2) de 40 à 60 pour cent en poids d'unités structurales de styrène ou de méthacrylate de méthyle ;
b2) de 38 à 59 pour cent en poids d'unités structurales d'au moins un monomère sélectionné dans le groupe constitué de l'acrylate d'éthyle, de l'acrylate de butyle, et de l'acrylate de 2-éthylhexyle ; et
c2) de 0,2 à 5 pour cent en poids d'unités structurales d'un sel de lithium, de sodium, ou de potassium d'un monomère d'acide carboxylique ;

dans laquelle la $T_g$ de la deuxième phase est inférieure à 20 °C.

**9.** La composition de l'une ou l'autre des revendications 7 et 8 qui comprend en outre au moins un constituant sélectionné dans le groupe constitué des dispersants, des pigments, des antimousses, des tensio-actifs, des solvants, des extendeurs, des coalescents, des biocides, des polymères opaques, et des colorants, dans laquelle la taille de particule des particules de polymère multiphases va de 250 nm à 700 nm.

**10.** La composition de la revendication 9 qui a une teneur en COV inférieure à 50 g/L.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4468498 A
- US 5326843 A
- US 9340685 B